**Europäisches Patentamt**

(19) **European Patent Office**

**Office européen des brevets**

(11) Publication number: **0 205 909 B1**

# EUROPEAN PATENT SPECIFICATION

(45) Date of publication of the patent specification: 27.12.89

(21) Application number: 86106724.7

(22) Date of filling: 16.05.86

(51) Int. Cl.⁴: **G 01 G 17/00,** G 01 G 19/00, G 01 G 15/00, B 65 B 11/04

(54) **Automatic weighing device in wrapping machines with rotary table.**

(30) Priority: 27.05.85 IT 2090685

(43) Date of publication of application: 30.12.86 Bulletin 86/52

(45) Publication of the grant of the patent: 27.12.89 Bulletin 89/52

(84) Designated Contracting States: AT BE CH DE FR GB IT LI LU NL SE

(56) References cited:
EP-A-0 107 632
BE-A-890 814
GB-A-1 139 601
US-A-4 299 076

(73) Proprietor: **Valsesia, Giacomo, Via Adige 18/20, Pregnana Milanese (MI) (IT)**

(72) Inventor: **Valsesia, Giacomo, Via Adige 18/20, Pregnana Milanese (MI) (IT)**

(74) Representative: **Faggioni, Marco, Dr. Ing., FUMERO - Studio Consulenza Brevetti Widenmayerstrasse 4/I, D-8000 München 22 (DE)**

EP 0 205 909 B1

## Description

The present invention relates to a wrapping machine with a rotary table.

Wrapping machines with a rotary table have since long been present on the market, and they are specifically designed for the cold-packing of goods stacked on pallets. To carry out this operation, the previously loaded pallets are placed on the rotary table by a machine and the packing is done by means of a plastic film, which helically wraps the stacked goods thanks to the rotation of said table.

After said wrapping operation, the load must often be weighed and then labelled with the weighing data. At present, said operation involves removing the packed pallet from the wrapping machine and placing it onto an ordinary weighing machine to take its weight, and then labelling the load.

Obviously, this double and distinct wrapping and weighing operation involves long operating times and high labour costs, the possibility of damaging the load in its successive transfers and, above all, a waste of space, both for the area actually occupied by the two different machines and for the space required to move the loaded pallets from one machine to the other.

The object of the present invention is therefore to supply an automatic machine, apt to carry out both the wrapping and the weighing operations, without having to transfer the loaded pallet.

According to the present invention, said object is reached by providing a wrapping machine with rotary table for the cold-packing of goods loaded on pallets, characterized in that the mechanical connection between said rotary table and its support is obtained by means of at least one deformable element, apt to send a signal indicating the weight of said goods.

According to a preferred embodiment of the invention, said deformable elements consist of four load cells, positioned on the four corners of a square concentric to the rotary table.

The invention will now be described in further detail, with reference to the accompanying drawings, which represent a preferred embodiment thereof and in which:

Fig. 1   is a perspective view of a wrapping machine with rotary table embodying the invention;

Fig. 2   is a side elevation view of the same machine of figure 1;

Fig. 3   is a plan view of the same machine of figure 1;

Fig. 4   is an enlarged scale cross-section view along the line IV - IV of figure 3; and

Fig. 5   is an enlarged scale cross-section view along the line V - V of figure 3.

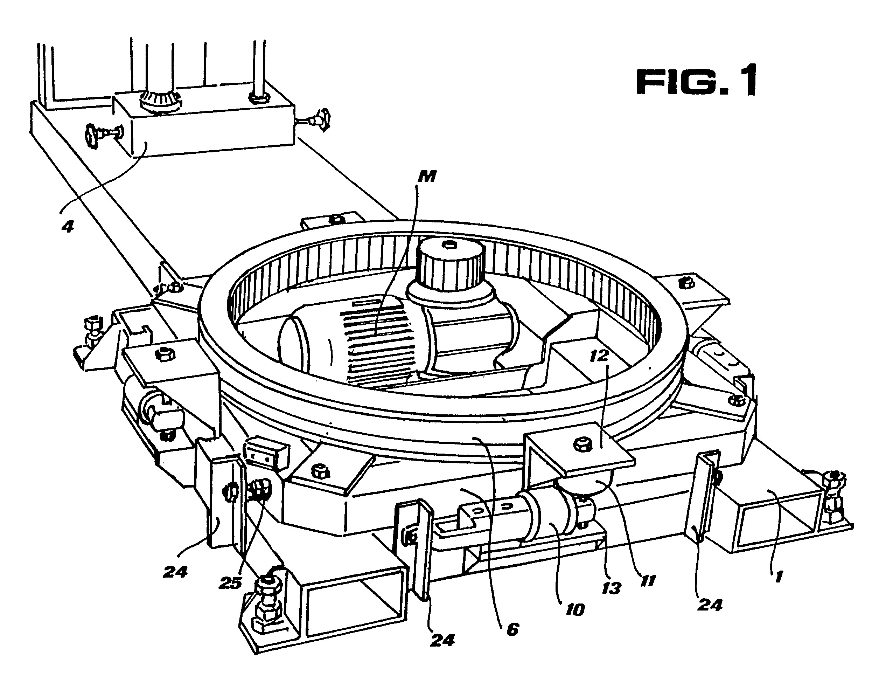

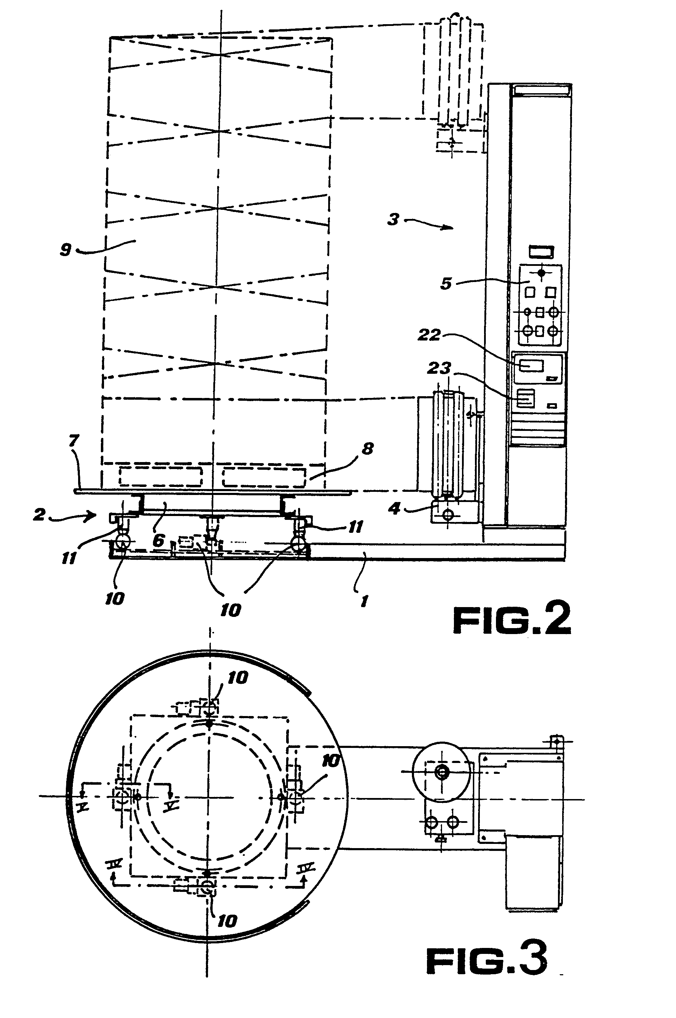

Figures 1 to 3 illustrate a wrapping machine with rotary table, for the cold-packing of goods loaded on pallets, the operation of which is briefly described hereinafter.

Said machine comprises a horizontal frame 1, carrying at one end the rotary table unit 2, and at the other end a vertical column 3 supporting the slide 4 for the roll and also housing the various control panels 5 for operating the machine.

The rotary table unit 2 in turn comprises a thrust bearing 6, or other similar device, apt to rotatably connect the frame 1 with the actual rotary table 7; the thrust bearing 6 is caused to rotate by proper motor means indicated by M in figure 1.

In operation, a pallet 8 is placed on the rotary table 7, a load 9 comprising several loose objects having been stacked on said pallet; the rotary table 7 is then caused to rotate and the free end of a thin plastic film, fed from a roll carried by the slide 4, is caused to adhere to said load. The combined rotatory motion of the table 7 and vertical travelling motion of the slide 4 along the column 3 allows to wrap the load 9 which is thus packed.

From the above it is clear that, in the known wrapping machines with rotary table, the thrust bearing 6 or equivalent mechanical piece is rigidly connected, on one side, to the frame 1 and, on the other side, to the rotary table 7, thereby allowing the free rotation of this latter in respect of the frame 1.

In the arrangement according to the present invention, said structural continuity is interrupted and one of the aforespecified rigid connections is replaced by one or more deformable elements, apt to send a signal corresponding to the weight being loaded thereon. Preferably, said elements consist of electronic devices, known on the market as load cells, apt to send an electric signal according to the deformation they undergo and thus according to the weight of the overlying load. Said elements may however also consist of other types of devices, for instance mechanical, in which case the signal being sent will obviously be a mechanical signal.

In the embodiment shown in figures 1 to 3, there are four cells 10, interposed between the frame 1 and the thrust bearing 6 for the mechanical connection thereof. In particular, the load cells are of the type apt to work by flexure and they are fixed, on one side, directly to the frame 1 and, on the other side, to a shock-absorbing and travel limiting unit 11 which is in turn fixed to a bracket 12 connected to the thrust bearing 6.

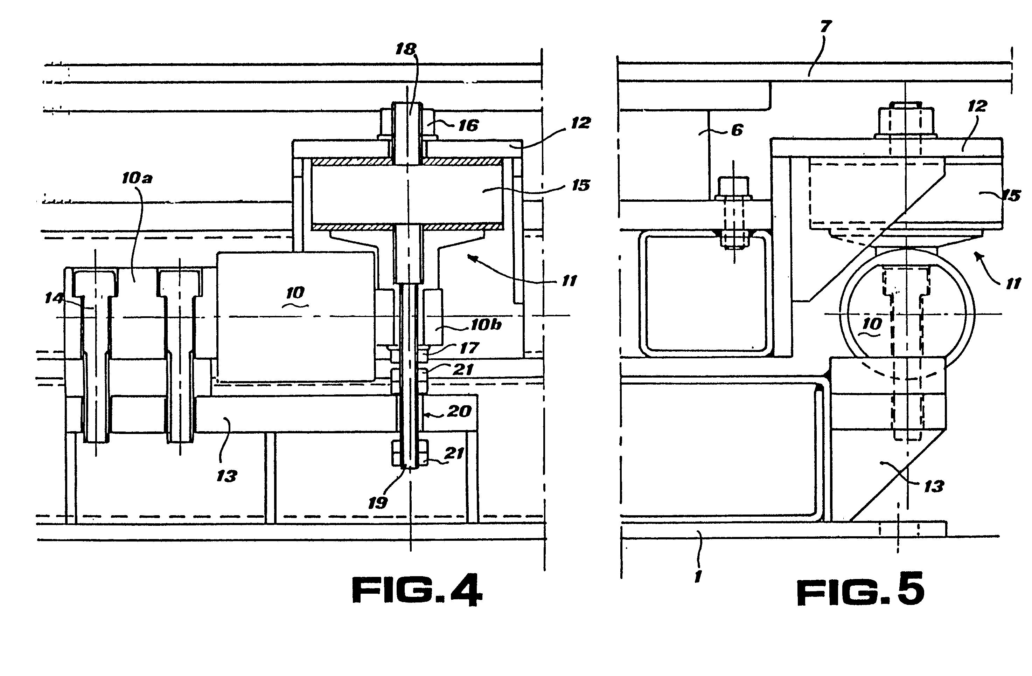

The configuration and positioning of the load cells 10 and of the respective shock-absorbing and travel limiting unit 11 are shown in further detail in figures 4 and 5. Each load cell 10 has a pierced support extension 10a, by which it is rigidly fixed - by means of two screws 14 - to a bracket 13 connected to the frame 1. At the opposite end, said cell has a pierced projection 10b, on which bear the loads being weighed, through said unit 11.

The unit 11 comprises a shock-absorbing joint 15, the central part of which is made of elastomeric material and which is fixed on one side, by nuts 16, to the bracket 12 and on the other side, by nuts 17, to the projection 10b of the cell 10.

Said nuts 16 and 17 act respectively on two threaded hubs 18 and 19, emerging from the joint 15 and cooperating with respective holes provided on the bracket 12 and on the projection 10b of the cell 10. The shape of the joint 15 is such that - once the nuts 16 and 17 have been tightened - there is no slack at all between the bracket 12, the joint 15 and the load cell 10.

Through this arrangement, any load variations on the rotary table 7 cause an oscillation of the projection 10b, thereby deforming the load cell 10, which will thus send an electric signal which - suitably decoded - gives an exact indication of the weight loaded on the table 7.

Since the load cell 10 is an extremely sensitive instrument, it is also very delicate and it therefore cannot stand oscillations of its projection 10b exceeding a predetermined amplitude, without undergoing irreparable deterioration. To solve this problem - which can easily occur, either due to an overload of the table beyond the allowed limits of carrying capacity, or due to the dynamic or impact effects on loading the pallet - the threaded hub 19 of the joint 15 extends for a certain length beyond the nut 17, penetrating and crossing a hole 20 provided in the underlying bracket 13 connected to the frame 1. A pair of screw nuts with respective lock nuts 21 is screwed and fixed on the hub 19, above and below the hole 20, so as to limit - by suitably adjusting the position thereof - the maximum shifting allowed for the hub 19 and thus the oscillations of the projection 10b of the cell 10.

In order to avoid damaging the load cells, it is also advisable to limit the length of the transversal movements of the thrust bearing 6 - which may derive from accidental impacts - by means of stop bars 24 connected to the frame 1 and provided, in their upper part, with adjustable screw means 25, acting against the thrust bearing 6 during its lateral displacements.

As already said, the described and illustrated embodiment makes use of four load cells, of the type working by flexure, but it is evident that the number or type of said cells is by no means binding to carry out the invention.

The electric signals sent by the cells 10 are picked up and transmitted to a processing system housed in the column 3. It is hence possible to read directly on the control panel 5 the value of the weight being measured - to which the tare has already been deducted - through the reading window 22. and to obtain an adhesive label indicating said weight through the printing unit 23.

In the embodiment illustrated, the cells 10 form the mechanical connection between the frame 1 and the stationary part of the thrust bearing 6. The cells are therefore stationary and the weight which they measure will include a tare corresponding to the weight of the thrust bearing 6. of the rotary table 7 and of the motor means M causing the rotation of said table.

In a further embodiment (not shown), the cells 10 form the mechanical connection between the mowable part of the thrust bearing 6 and the rotary table 7. In this case, therefore, the cells 10 are rotating together with the table 7 and the weight which they measure will include a tare corresponding merely to the rotary table 7. This embodiment provides for suitable means, apt to electrically connect - continuously or discontinuously, according to the type of construction - the cells 10 with the processing system housed in the column 3.

From the above, it is extremely clear that the present invention has fully reached its object. It has in fact supplied an exceptionally simple machine, apt to brilliantly perform the functions so far performed by two separate machines, with undeniable advantages as far as purchasing costs as well as manufacturing costs and times, and finally also as far as saving of space.

The invention has been described with reference to a preferred embodiment thereof, but there may be many others differing from the one heretofore described and illustrated, all within reach of a technician skilled in the art and thus falling within the scope of the invention itself as claimed. In particular, said embodiments may consist in varying the number, shape and positioning of the load cells, or in replacing said cells by other deformable elements apt to form the mechanical connection between the rotary table and the relative support, supplying at the same time a signal varying according to said deformation and thus to the load being weighed.

## Claims

1. Wrapping machine with rotary table (7) for the cold-packing of goods loaded on pallets (8), characterized in that the mechanical connection between the rotary table (7) and its support is obtained by means of at least one deformable element (10) apt to send a signal indicating the weight of said goods.

2. Machine as in claim 1, wherein said deformable element (10) consists of an electronic device and said signal is an electric signal.

3. Machine as in claim 1, wherein said deformable element (10) consists of a mechanical device and said signal is a mechanical signal.

4. Machine as in claim 1, wherein said deformable element (10) consists of a load cell, apt to send an electric signal indicating the weight loaded thereon.

5. Machine as in claim 1, wherein said mechanical connection comprises a shock-absorbing device (15) interposed between the rotary table (7) and the deformable element (10).

6. Machine as in claim 1, wherein said mechanical connection comprises a travel limiting device (19 - 21), apt to keep within predetermined limits the deformation of said deformable element (10).

7. Machine as in claim 1, wherein said deformable element (10) is interposed to connect the stationary part of the rotary table unit (2) with the machine frame (1).

8. Machine as in claim 1, wherein said deformable element (10) is interposed to connect the movable part of the rotary table unit (2) with the rotary table (7) itself, and rotates with this latter.

9. Machine as in claim 8, wherein means are provided to pick up the signals sent by said deformable element (10) and transmit them externally to the rotary table (7).

10. Machine as in claim 4, wherein said load cells are four, positioned at the four corners of a square concentric to the rotary table (7), and they are of the flexural type.

**Revendications**

1. Machine d'empaquetage à plateau tournant (7) pour l'emballage à froid de produits chargés sur des palettes (8), caractérisée en ce que la liaison mécanique entre le plateau tournant (7) et son support est obtenu au moyen d'au moins un élément déformable (10) capable d'émettre un signal indicatif du poids des produits.

2. Machine selon la revendication 1, dans laquelle l'élément déformable (10) est constitué par un dispositif électronique et le signal est un signal électrique.

3. Machine selon la revendication 1, dans laquelle l'élément déformable (10) est constitué par un dispositif mécanique et le signal est un signal mécanique.

4. Machine selon la revendication 1, dans laquelle l'élément déformable (10) est constitué par une cellule dynamométrique adaptée à émettre un signal électrique indiquant le poids chargé sur cette cellule.

5. Machine selon la revendication 1, dans laquelle la liaison mécanique comprend un dispositif amortisseur de chocs (15) interposé entre le plateau tournant (7) et l'élément déformable (10).

6. Machine selon la revendication 1, dans laquelle la liaison mécanique comprend un dispositif limiteur de course (19 - 21), capable de maintenir la déformation de l'élément déformable (10) dans des limites prédéterminées.

7. Machine selon la revendication 1, dans laquelle l'élément déformable (10) est interposé entre la partie fixe de la table tournante (2) au bâti (1) de la machine et les relie.

8. Machine selon la revendication 1, dans laquelle l'élément déformable (10) est interposé entre la partie mobile de la table tournante (2) au plateau tournant (7) lui-même, les relie et tourne avec le plateau.

9. Machine selon la revendication 8, dans laquelle des moyens sont prévus pour capter les signaux émis par l'élément déformable (10) et les transmettre à l'extérieur du plateau tournant (7).

10. Machine selon la revendication 4, dans laquelle les cellules (10) sont au nombre de quatre, sont disposées au quatre angles d'un carré centré sur le plateau tournant (7), et sont du type travaillant à la flexion.

**Patentansprüche**

1. Verpackungsmaschine mit einem Drehtisch (7) zum Kaltverpacken von auf Paletten (8) ruhenden Gütern, dadurch gekennzeichnet, daß die mechanische Verbindung zwischen dem Drehtisch (7) und seinem Lager über wenigstens ein deformierbares Element (10) bewirkt wird, das zur Abgabe eines das Gewicht des Gutes angebenden Signals eingerichtet ist.

2. Maschine nach Anspruch 1 wobei das deformierbare Element (10) aus einer elektronischen Einrichtung besteht und das Signal ein elektrisches Signal ist.

3. Maschine nach Anspruch 1 wobei das deformierbare Element (10) aus einer mechanischen Einrichtung besteht und das Signal ein mechanisches Signal ist.

4. Maschine nach Anspruch 1, wobei das deformierbare Element (10) aus einer Lastzelle besteht, die zum Aussenden eines das auf ihr ruhende Gewicht angebenden elektrischen Signals eingerichtet ist.

5. Maschine nach Anspruch 1, wobei die mechanische Verbindung eine stoßdämpfende Einrichtung (15) aufweist, die zwischen dem Drehtisch (7) und dem deformierbaren Element (10) angeordnet ist.

6. Maschine nach Anspruch 1, wobei die mechanische Verbindung eine eine Verschiebung begrenzende Einrichtung (19 - 21) aufweist, die dazu eingerichtet ist, die Deformation des deformierbaren Elements (10) in vorgegebenen Grenzen zu halten.

7. Maschine nach Anspruch 1, wobei das deformierbare Element (10) zur Verbindung des ortsfesten Teiles der Drehtischeinheit (2) mit dem Maschinenrahmen (1) angeordnet ist.

8. Maschine nach Anspruch 1, wobei das deformierbare Element (10) zur Verbindung des beweglichen Teiles der Drehtischeinheit (2) mit dem Drehtisch (7) selbst angeordnet ist und sich mit diesen dreht.

9. Maschine nach Anspruch 8, wobei Mittel zur Aufnahme der von dem deformierbaren Element (10) ausgesendeten Signale und zu deren externen Übertragung auf den Drehtisch (7) vorgesehen sind.

10. Maschine nach Anspruch 4, wobei vier Lastzellen vorgesehen sind, die an den vier Ecken eines mit dem Drehtisch (7) konzentrischen Quadrats angeordnet und vom Biegungstyp sind.

**FIG. 1**

EP 0 205 909 B1

**FIG.2**

**FIG.3**

**FIG.4**

**FIG.5**

EP 0 205 909 B1